# EUROPEAN PATENT APPLICATION

(11) **EP 1 184 914 A1**
(43) Date of publication of application: **06.03.2002**
(21) Application number: 00900880.6
(22) Date of filing: 24.01.2000
(51) Int. Cl.: H01M 2/02, H01M 2/08, B32B 15/08

(54) **PACKAGE FOR MATERIAL CONTAINING NONAQUEOUS SOLVENT AND CELL COMPRISING THE SAME**

(71) Applicant: MITSUBISHI DENKI KABUSHIKI KAISHA, Tokyo 100-8310 (JP)
(72) Inventor: YOSHIDA, Yasuhiro, Mitsubishi Denki K.K., Tokyo 100-8310 (JP); HIROI, Osamu, Mitsubishi Denki K.K., Tokyo 100-8310 (JP); NAKAO, Yukiyasu, Mitsubishi Denki K.K., Tokyo 100-8310 (JP); SHIOTA, Hisashi, Mitsubishi Denki K.K., Tokyo 100-8310 (JP); AIHARA, Shigeru, Mitsubishi Denki K.K., Tokyo 100-8310 (JP); TAKEMURA, Daigo, Mitsubishi Denki K.K., Tokyo 100-8310 (JP); URUSHIBATA, Hiroaki, Mitsubishi Denki K.K., Tokyo 100-8310 (JP); MURAI, Michio, Mitsubishi Denki K.K., Tokyo 100-8310 (JP); KURATA, Tetsuyuki, Mitsubishi Denki K.K., Tokyo 100-8310 (JP)
(74) Representative: Sajda, Wolf E., Dipl.-Phys.
(86) International application number: JP0000309
(87) International publication number: WO0156093

(57) **Abstract**

There is provided a package for a material containing a non-aqueous solvent by which water invasion from outside is lowered and adhesion strength is less decreased over the long term, and a non-aqueous electrolytic battery having a lengthened life and high reliability.

In a package for a material containing a non-aqueous solvent, having a bag construction made by adhesion of a part of a lamination film comprising a metal layer and a resin layer, a part of the adhesion construction between the metal layers is thinned at a position inward to the package interior side.

## Description

### TECHNICAL FIELD

The present invention relates to a package for a material containing a non-aqueous solvent. More particularly, the present invention relates to a package for a material containing a non-aqueous solvent which can prevent water from invading externally and strength from decreasing over the long term, and to a non-aqueous electrolytic battery whose life is lengthened and reliability is heightened by using said package.

### BACKGROUND ART

Packages comprising a film such as an aluminum-laminated film are used in a wide range of fields including category of food because of its lightness in weight and excellent blocking for water or gas. While an outer housing made of metal such as stainless or aluminum is applied to practically used non-aqueous electrolytic batteries including typical lithium ion batteries so far, it is expected to apply these packages to non-aqueous electrolytic batteries. This is because weight saving and thin construction will be possible if the outer housing is replaced by the package comprising a film.

Problems still remain, however. Such a package comprising a film is prepared by thermal melting and adhesion of a part of a folded film covering a battery content to be formed like a bag. Compared to the currently used metal outer housings, these packages have inferior blocking against water invading into a battery and insufficient strength because of its adhesion part, which possibly causes troubles with long-term battery performance or reliability in high temperature.

The present invention has been carried out in order to solve the above problems. The object of the present invention is to provide a package for a material containing a non-aqueous solvent using a laminated film, by which water blocking is ensured and strength is maintained easily for a long time, and to provide a non-aqueous electrolytic battery using the same.

As a means for improving the reliability of these packages, there is, for example, a process for maintaining credible sealing by constructing a heat-sealed part with a plurality of resins, i.e., a material having superior barrier performance against electrolyte and a material having excellent vapor barrier performance as shown in Japanese Unexamined Patent Publication No. 274896/1997. However, these processes have problems with increase of package weight and complicated steps.

### DISCLOSURE OF INVENTION

The present inventors have studied on and found some important facts about water blocking and durability of adhesion strength concerning a package for a material containing a non-aqueous solvent using a laminated film. On one hand it was found that the water blocking and the adhesion strength of the package remarkably decreased because of the non-aqueous solvent diffused from the interior side of the package. This is because diffusion rate of water increases and adhesion strength decreases due to diffusion of the non-aqueous solvent into an adhesion layer (a resin layer and adhesive layers) within an area having an adhesion construction between metal layers (an adhesion part).

On the other hand it was also found that a trace of reactive substance diffused into the adhesion construction between metal layers from the package interior side in case of non-aqueous electrolytic batteries and the like, leading to decrease of water blocking and adhesion strength of the package. The reactive substance in a trace quantity seems to comprise a decomposed electrolyte salt. Diffusion of the substance causes deterioration of the adhesion layer between the metal layers or of the metal layer such as aluminum layer, resulting in decrease of water blocking performance and adhesion strength. Prevention of the diffusion from the battery interior side is highly effective in improving package performances.

Although a thin adhesion construction preferably inhibits the diffusion from the package interior side, it makes across-the-board, reliable adhesion difficult when adhesion is carried out. In the present invention diffusion of the substance from the interior side is prevented by making a thin part in the adhesion layer with thickness of the adhesion layer maintained to keep adhesion reliability.

More specifically, the present invention relates to:
a package for a material containing a non-aqueous solvent, having a bag construction made by adhesion of a part of a lamination film comprising a metal layer and a resin layer, wherein a part of the adhesion construction between the metal layers is thinned at a position inward to the package interior side (Claim 1);
the package for a material containing a non-aqueous solvent of Claim 1, wherein the thin part in the adhesion construction is formed by exerting uneven pressures during the adhesion (Claim 2);
the package for a material containing a non-aqueous solvent of Claim 1, wherein the thin part in the adhesion construction is formed by exerting uneven temperatures during the adhesion (Claim 3);
the package for a material containing a non-aqueous solvent of Claim 1, wherein the thin part is formed by drawing for application of shearing force to the adhesion layer during the adhesion (Claim 4);
the package for a material containing a non-aqueous solvent of Claim 1, wherein the thin part is formed by previous concavo-convex treatment on the metal layer (Claim 5);
the package for a material containing a non-aqueous solvent of Claim 1, wherein the thin part is formed by making a thin portion in the adhesion layer previously (Claim 6);
the package for a material containing a non-aqueous solvent of Claim 1, wherein the bag construction is made by adhesion, with a hot-melt adhesive, of a part of the lamination film comprising a metal layer and a resin layer (Claim 7); and
a battery using the package for a material containing a non-aqueous solvent of Claim 1 (Claim 8).

### BRIEF DESCRIPTION OF DRAWINGS

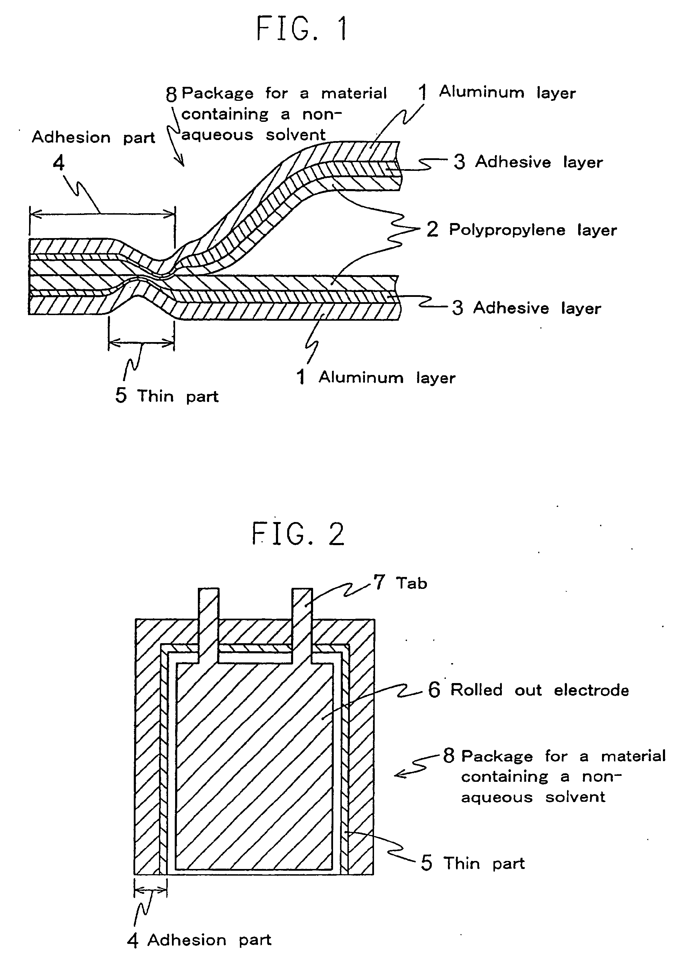

Fig. 1 is a cross-sectional view schematically showing the adhesion construction of the package for a material containing a non-aqueous solvent according to one embodiment of the present invention; and Fig. 2 is a cross-sectional view schematically showing the construction of the non-aqueous electrolytic battery prepared in Example 1.

In Fig. 1, numeral 1 indicates an aluminum layer, 2 a polypropylene layer, 3 an adhesive layer, 4 an adhesion part and 5 a thin part.

In Fig. 2, numeral 4 indicates the adhesion part, 5 the thin part, 6 a rolled out electrode, 7 a terminal for current collection (tab) and 8 a package for a material containing an aqueous solvent.

### BEST MODE FOR CARRYING OUT THE INVENTION

The present invention relates to a package for a material containing a non-aqueous solvent, having a bag construction made by adhesion of a part of a lamination film comprising a metal layer and a resin layer, wherein a part of the adhesion construction between the metal layers is thinned at a position inward to the package interior side.

The film used for the package is formed by laminating at least a metal layer and a resin layer, which coats the package interior side of the metal layer.

Metal foil such as aluminum foil, titanium foil or stainless foil can be used for the metal layer. The thickness of the metal layer is preferably 3 to 200 µm, more preferably 10 to 100 µm. Too thin the metal layer tends to cause easy generation of defects such as pinholes, leading to inferior reliability. Too thick the metal layer tends to cause increase of the weight. The surface of the metal layer may be treated so that an oxide film or a nitride film is formed thereon in order to improve endurance.

As to the resin layer, any resin layer may be available as long as it does not dissolve into a material containing a non-aqueous solvent such as an electrolytic solution and can prevent the metal layer from corroding. A polyolefin film such as polypropylene, polyethylene or a copolymer thereof is preferably used as the resin layer. Other useful films include a film comprising a fluorine resin, a vinyl polymer such as polystyrene, a cross-linkable acrylic resin and the like. The thickness of the resin layer is preferably 5 to 200 µm, more preferably 20 to 100 µm. When the resin layer is thin, steady heat-sealing tends to become difficult. When the resin layer is thick, the strength at the heat-sealing part tends to decrease.

An adhesive can be used for the adhesion of the metal layer and the resin layer, if necessary. Coating or film lamination onto the package exterior side of the metal layer is also preferable for improving strength and preventing corrosion.

The package of the present invention has a bag construction made by adhesion of a part of a lamination film comprising a metal layer and a resin layer. An adhesive can be used for the adhesion of the film. A hot-melt adhesive is preferable as the adhesive in terms of workability, moisture permeability or the like. When polyolefin is used for the resin layer of the film, this can be used as the hot-melt adhesive for the adhesion of the film. An epoxy adhesive or a urethane adhesive can be also used as long as it is resistant to the non-aqueous solvent such as that of an electrolytic solution. These adhesives can be used in combination of two or more. The resin layer at the adhesion part of the film may be removed if necessary. In this case attention should be paid not to expose the metal layer to the package interior, and not to generate defects such as crack on the metal layer. Also useful is a hot-melt adhesive in the form of tape.

The average thickness of the adhesion layer (the resin layer and the adhesive layer) of the adhesion part having the adhesion construction between the metal layers (the adhesion part) is preferably about 0.1 to 400 µm, more preferably 1 to 100 µm. While it can be expected that the thinner the adhesion layer is, the more efficiently water invasion is prevented and the larger peeling resistance becomes, too thin an adhesion layer tends to make across-the-board, reliable adhesion difficult. The average thickness of the adhesion layer can be calculated, for example, by measuring thickness of several points of the adhesion part at equal intervals followed by calculation of thickness of the adhesion layer (the resin layer and the adhesive layer) therefrom at each point to take an average out of the values within any region.

The thin part means the part thinner than the average thickness. The thickness of the thin part is preferably 5 to 100 %, more preferably 30 to 95 % thinner than the average thickness. When the difference between the average thickness and the thickness of the thin part is too small, the thinning brings about little effect. When the difference is too large, adhesion strength may not be maintained. The thickness of the thin part is preferably 0.01 to 50 µm, more preferably 0.05 to 10 µm, though it depends on the average thickness.

The width of the thin part is preferably 1 to 70 %, more preferably 3 to 40 % the width of the adhesion part. In case where the thin part is narrow in width, reliable thinning tends to be difficult and a sufficient effect may not be achieved particularly when the thin part is not thin enough. When the thin part is too wide, excellent adhesion property may not be ensured.

The thin part is not necessarily positioned along all of the adhesion part, but it may be placed only at the area where strength is particularly required or intermittently following the adhesion part. As a matter of course, however, the one having the thin part along all of the adhesion part shows a greater effect in most cases.

Preferably, the thin part is distributed on the part having adhesion construction inwardly to the package interior side, that is, more to the inside from the centric position between the exterior edge and the interior edge of the adhesion part. When the thin part is not distributed inwardly to the package interior side, the effect on preventing permeation of the non-aqueous solvent and the like may be reduced at the adhesion layer, and prevention of water invasion and maintenance of strength may not be achieved sufficiently.

The thin part can be formed by exerting uneven pressures to the adhesion part during the adhesion. It may be preferable when the pressures at each position are different during the adhesion. The uneven pressures may be exerted by pressing the part with different pressures using a pressing jig having a convex part on the contact part with films (a press surface) or using a plurality of jigs. It is also possible to exert pressures in several installments while change of pressure in this case enables a thin part to be formed as well. For example, the thin part is formed by exerting a high pressure only to the thinning part after adding a low pressure all over the adhesive part. In general, the high pressure part becomes thinner than the low pressure part. Usually, a pressure of about 1 gf/cm² to 1 kgf/cm² allows adhesion of films while a pressure of about 10 gf/cm² to 10 kgf/cm² can lead to formation of a thin part depending on kinds of the films for adhesion and adhesives therefor.

The thin part can be formed by exerting uneven temperature to the adhesion part during the adhesion time. For example, it is also possible to form a thin part effectively by changing temperatures in pressing by several installments. Concretely, the thin part can be formed by pressing the thinning part alone at high temperature after pressing the entire area of the adhesion part at low temperature. Usually, the pressure part at high temperature become thinner than the pressure part at low temperature. In general, temperature of about 60 to 200 °C allows films to adhere while a temperature of about 100 to about 250 °C enables formation of a thin part depending on kinds of the films for adhesion and adhesives therefor.

The thin part can be formed more efficiently by drawing for application of shearing force to the adhesion layer during the adhesion. For example, the drawing for application of shearing force to the adhesion layer can be performed by displacing the press surface of a jig toward the direction vertical to the longitudinal direction of the film with pressurization using a pressing jig having a convex part on the film contact part (the press surface). There is a tendency that the thin part is efficiently formed particularly when the adhesion layer comprises a several kinds of layers having different hardness.

Fig. 1 schematically shows adhesion construction of the package for a material containing a non-aqueous solvent having, in the adhesion part 4, the thin part 5 formed by drawing for application of shearing force to the adhesion layer (a polypropylene layer 2 and the adhesive layer 3) in the adhesion, regarding the package for a material containing a non-aqueous solvent which has a bag construction made by adhesion of a part of a lamination film of the aluminum layer 1 and the polypropylene layer 2 with an adhesive.

The thin part can be formed by previous concavo-convex treatment of the metal layer. While the shape of the concavo-convex part in this case can be determined, for example, in consideration of the shape, thickness and the like of the thin part to be formed, it is usually preferable that the thin part has a convex part which is about 5 to about 500 µm high and about 10 to about 3000 µm wide.

The thin part can be also formed by adhesion after partial thinning of the adhesion layer to be thinned by previous removal. While the removal manner of the adhesion layer in this case can be determined, for example, in consideration of the shape, thickness and the like of the thin part to be formed, it is usually preferable to remove a part of the layer to form a narrow channel which is about 4 to about 200 µm deep and about 50 to about 3000 µm wide.

The package of the present invention can be applied to various package products using a non-aqueous solution such as a non-aqueous electrolytic battery. When the package of the present invention is used for a non-aqueous electrolytic battery, possible battery construction is a laminated construction of plane electrodes and separators, a rolled out construction, a folded construction or a combination thereof.

Current collector terminals (tabs) for the electrode of a battery are drawn out from the adhesion part of the package. As to adhesion of this part the thin part should not be positioned close to the electrode tabs, or there should be another insulating layer in order to maintain insulation for the tabs.

As the non-aqueous solvent for an electrolytic solution an ether solvent such as dimethoxy ethane or diethyl ether, or a carbonate or ester solvent such as ethylene carbonate or propylene carbonate is used alone or in combination thereof. LiPF₆, LiClO₄, LiBF₄ and the like can be used as the electrolyte.

Hereinafter more concrete examples of the present invention are explained in detail but the present invention is not limited thereto.

### EXAMPLE 1

### (Process for Preparing Film)

A piece of 15-µm-thick aluminum foil was laminated with a 12-µm-thick film of polyethylene terephtharate film by using a urethane adhesive (5-µm-thick). A resin layer was formed by extrusion coating of polyethylene on the opposite side of the aluminum foil in a thickness of 50 µm to prepare an aluminum laminated film. The film was cut into a piece of 70 mm × 120 mm.

### (Process for Preparing Battery)

In Fig. 2, the construction of a non-aqueous electrolytic battery prepared in Example 1 is schematically shown. Explanation is made as to a process for preparing a battery with reference to Fig. 2 in the following.

A positive electrode material was prepared by applying a paste of a positive electrode active material obtained by mixing 87 % by weight of LiCoO₂, 8 % by weight of a graphite powder (KS-6, available from LONZA Co., Ltd.) and 5 % by weight of poly(vinylidene fluoride) as a binder resin onto a piece of 20-µm-thick aluminum foil according to Doctor Blade method in a thickness of about 100 µm.

A negative electrode material was prepared by applying a paste of a negative electrode active material obtained by mixing 95 % by weight of mesophase microbeads carbon (available from Osaka Gas Co., Ltd.) and 5 % by weight of poly(vinylidene fluoride) as a binder onto a piece of 12-µm-thick copper foil according to Doctor Blade method in a thickness of about 100 µm.

Each of the positive and negative electrode materials was cut into a size of 50 mm × 200 mm to prepare a positive electrode and a negative electrode, and current collector terminals (tabs) 7 were attached thereto. The separator cut into a size of 52 mm × 210 mm was interposed between the positive electrode and the negative electrode. Upon rolling out the same in a width of about 5 cm, it was fixed by using a strip of polyimide tape.

Thereafter, the rolled out electrode 6 was interposed by the aluminum laminated film as shown in Fig. 2, and heat-sealing was performed twice. Each side end where no tab is positioned was heat-sealed (at a pressure of 10 gf/cm³) in a width of about 7 mm in the first sealing using a pair of normal sealer having a heater with a flat surface. Then the second heat-sealing was performed at a position closest to the battery interior in the adhesion part obtained by the first sealing. A 7-mm-wide adhesion layer was formed thereby with a 1-mm-wide thin part right beside the battery interior. The average thickness of the adhesion layer in the adhesion part 4 of the package was 75 µm, while the average thickness of the thin part 5 was 30 µm.

Then an electrolytic solution of LiBF₄ as an electrolyte in ethylene carbonate and 1,2-dimethoxyethane as a solvent was injected from a remaining edge followed by preliminary charge. Then the edge was heat-sealed by interposing a 25-µm-wide polyethylene hot-melt adhesive between the tabs 7 of the electrodes and the aluminum laminated film.

### EXAMPLE 2

A battery was prepared in the same manner as in Example 1 except that the temperature for the second heat-sealing was 180°C. The average thickness of the adhesion layer in the adhesion part of the package was 75 µm, while the thickness of the thin part was 25 µm.

### EXAMPLE 3

A rolled out electrode prepared in the same manner as in Example 1 was sandwiched by an aluminum laminated film and each side end without the tabs was heat-sealed in a width of about 7mm by using a pair of sealer having a concave part 0.2 mm high and about 0.5 mm wide on one side of the press surface. An about 7-mm-wide adhesion layer was formed thereby with a 0.5-mm-wide thin part right beside the battery interior. The average thickness of the adhesion layer in the adhesion part of the package was 95 µm, while the thickness of the thin part was 25 µm. After that an electrolytic solution was injected followed by preliminary discharge, and the remaining edge was heat-sealed to complete preparing the battery in the same manner as in Example 1.

### EXAMPLE 4

Each side end without the tabs was heat-sealed in a width of about 7mm by using the same sealer having a concave part as that in Example 3. The press surfaces of the upper part and the lower part of the sealer were displaced about 0.5 mm toward the direction vertical to the longitudinal direction of the film during heating with applying pressure. An about 7.5-mm-wide adhesion layer was formed thereby with a 0.8-mm-wide thin part right beside the battery interior. Shearing force was applied when the sealer was displaced to make the part to be thinned in the adhesion layer wider and thinner. The average thickness of the adhesion layer was 85 µm, while the thickness of the thin part was 3 µm. After that an electrolytic solution was injected followed by preliminary discharge, and the remaining edge was heat-sealed to complete preparing the battery in the same manner as in Example 1.

### EXAMPLE 5

A linear channel of 1.5 mm wide and 1 mm deep whose cross-section is almost isosceles-triangular was made on a steel plate. An aluminum laminated film prepared in the same manner as in Example 1 was placed over the above channel, and it was pressed by using a polypropylene jig from the opposite side to copy the channel on the film. A channel convex to the adhesion interface was made at a position in the adhesion part inward to the battery interior side when a battery was prepared in the same manner as in Example 1. Each side end of the aluminum laminated film without the tabs was heat-sealed in a width of about 7mm by using a pair of normal sealer having flat press surfaces. The average thickness of the adhesion layer was 85 µm, while the thickness of the thin part was 47 µm. After that an electrolytic solution was injected followed by preliminary discharge, and the remaining edge was heat-sealed to complete preparing the battery in the same manner as in Example 1.

### EXAMPLE 6

A scratch was made by using a keen-edged instrument on a part of the polyethylene layer of the aluminum laminated film prepared in the same manner as in Example 1 to form a channel about 1 mm wide. The channel was formed so that it was positioned at a part in the adhesion part inward to the battery interior side when a battery was prepared in the same manner as in Example 1. Each side end of the aluminum laminated film without the tabs was heat-sealed in a width of about 7mm by using a pair of normal sealer having flat press surfaces. The average thickness of the adhesion layer was 80 µm, while the thickness of the thin part was 15 µm. After that an electrolytic solution was injected followed by preliminary discharge, and the remaining edge was heat-sealed to complete preparing the battery in the same manner as in Example 1.

### COMPARATIVE EXAMPLE 1

A battery was prepared in the same manner as in Example 1 except that no thin part was formed by failure to perform the second heat-sealing. The average thickness of the adhesion layer was 85 µm.

### (Evaluation of Package Performance)

The prepared battery was kept under conditions of temperature of 80°C and humidity of 100 % for four weeks.

After that the battery was opened to measure the amount of water invaded inside (water invasion amount) according to Karl Fischer's method while strength at the adhesion part was measured based on peeling strength before and after the keeping. The results are shown in Table 1.

Formation of the thin part in the adhesion layer brings about decrease of the water invasion amount and prevents the peeling strength from decreasing as shown in Fig. 1.

**TABLE 1**

| Ex. No | Water invasion amount after keeping (mg) | Peeling strength before keeping (g/cm) | Peeling strength after keeping (g/cm) |
|---|---|---|---|
| Ex. 1 | 10 | 30 | 25 |
| Ex. 2 | 8 | 29 | 28 |
| Ex. 3 | 13 | 30 | 25 |
| Ex. 4 | 8 | 35 | 30 |
| Ex. 5 | 13 | 27 | 23 |
| Ex. 6 | 12 | 27 | 25 |
| Com. Ex. 1 | 20 | 30 | 15 |

According to the invention of Claims 1 to 7, it is possible to provide a package for a material containing a non-aqueous solution by which water invasion from outside is lowered and adhesion strength is less decreased over the long term.

According to the invention of Claims 2 to 7, it is possible to provide a package for a material containing a non-aqueous solution by which water invasion from outside is lowered and adhesion strength is less decreased over the long term in a simple, easy way.

According to the invention of Claim 8 it is expected to obtain a battery having a lengthened life and high reliability since water invasion from outside is lowered and strength is less decreased over the long term.

### INDUSTRIAL APPLICABILITY

The package for a material containing a non-aqueous solution according to the present invention can be applied to various package products using non-aqueous solvents. Regarding the application to batteries, it can be used not only for a lithium ion secondary battery of an organic electrolytic solution type or a gel electrolyte type, but also for a primary battery such as a lithium battery or another secondary battery.

## Claims

1. A package for a material containing a non-aqueous solvent, having a bag construction made by adhesion of a part of a lamination film comprising a metal layer and a resin layer,
wherein a part of the adhesion construction between the metal layers is thinned at a position inward to the package interior side.

2. The package for a material containing a non-aqueous solvent, wherein the thin part in the adhesion construction is formed by exerting uneven pressures during the adhesion.

3. The package for a material containing a non-aqueous solvent of Claim 1,
wherein the thin part in the adhesion construction is formed by exerting uneven temperatures during the adhesion.

4. The package for a material containing a non-aqueous solvent of Claim 2,
wherein the thin part is formed by drawing for application of shearing force to the adhesion layer during the adhesion.

5. The package for a material containing a non-aqueous solvent of Claim 1,
wherein the thin part is formed by previous concavo-convex treatment on the metal layer.

6. The package for a material containing a non-aqueous solvent of Claim 1,
wherein the thin part is formed by making a thin portion in the adhesion layer previously.

7. The package for a material containing a non-aqueous solvent of Claim 1,
wherein the bag construction is made by the adhesion, with a hot-melt adhesive, of a part of the lamination film comprising a metal layer and a resin layer.

8. A battery using the package for a material containing a non-aqueous solvent of Claim 1.
